Europäisches Patentamt

**European Patent Office**

Office européen des brevets

(11) Numéro de publication: **0 221 817**
A2

(12)

# DEMANDE DE BREVET EUROPEEN

(21) Numéro de dépôt: **86402403.9**

(22) Date de dépôt: **28.10.86**

(51) Int. Cl.⁴: **F 16 G 3/06**

---

(30) Priorité: **30.10.85 FR 8516104**

(43) Date de publication de la demande:
**13.05.87 Bulletin 87/20**

(84) Etats contractants désignés:
**AT BE CH DE FR GB IT LI LU NL**

(71) Demandeur: **Caoutchouc Manufacturé et Plastiques
Société Anonyme dite:
143, rue Yves-le-Coz B.P. 554
F-78005 Versailles Cedex(FR)**

(72) Inventeur: **Jaubert, Claude
18, rue de la Meulonnière
F-92500 Rueil Malmaison(FR)**

---

(54) Dispositif d'agrafage pour la jonction des courroies, procédé de jonctionnement utilisant ce dispositif et courroie jonctionnée selon ce procédé.

(57) Dispositif d'agrafage pour la jonction de courroies comportant des elements de renforcement en textile synthétique ou en cables metalliques, caractérisé en ce qu'il est constitué de deux plaques centrales d'appui (1), de deux coins (2) de montage et de mise à l'équerre, de deux novaux de blocage (3) qui permettent de réaliser des boucles avec les extrémités de courroie(s) et de deux plaques latérales de serrage (4) munies chacune d'une articulation à rotule (5), ces différents éléments constitutifs permettant audit dispositif de fonctionner par auto-serrage avec basculement.

Application aux sangles et courroies et, plus particulièrement, aux courroies transporteuses pour élévateurs.

EP 0 221 817 A2

./...

FIG. 6

L'invention concerne les courroies ou les sangles, et, plus particulièrement, les courroies transporteuses élévatrices. Elle est relative à une méthode et à un dispositif de jonction des extrémités de courroies, soit pour en accroître la longueur, soit pour réaliser une mise en sans fin par bouclage de la courroie sur elle-même, qui s'avère fiable en cours de fonctionnement. Le dis-positif d'agrafage ainsi que le procédé seront décrits ci-après, à titre d'exemple, dans l'application à une courroie pour élévateur, étant entendu qu'ils ne sont pas limités à cet emploi.

Une méthode classique de jonction des extrémités de courroies consiste en un jonctionnement à chaud, après avoir procédé à une imbrication des extrémités du matériau de renforcement.

Diverses formes de ces techniques de jonctionnement à chaud sont décrites dans de nombreux brevets tels que DE 1165354 de Franz Clouth Rheinische Gummiwarenfabric, FR74.03141 et DE 907996 de Continental Gummi-Werke, FR 1395634, FR 1582190 et FR 1440605 de Pneumatiques, Caoutchouc Manufacturé et Plastiques Kléber Colombes, US 173686 de Goodyear Tire and Rubber.

Une méthode est préconisée dans la norme allemande DIN 22131. Une autre méthode est décrite, par M.Gozdiff de Goodyear dans une conférence intitulée "Factors relating to vulcanized splice relia-bility for steel cable reinforced conveyor belting", présentée au 125ème meeting of the Rubber Division, American Chemical Society, à Indianapolis, du 8 au 11 mai 1984.

Enfin, un article de H.P.Lachmann intitulé "A survey of present-day conveyor belt technology", publié dans "Bulk solids handling", volume 4, numéro 4, de décembre 1984 fait le point des différentes technologies utilisables.

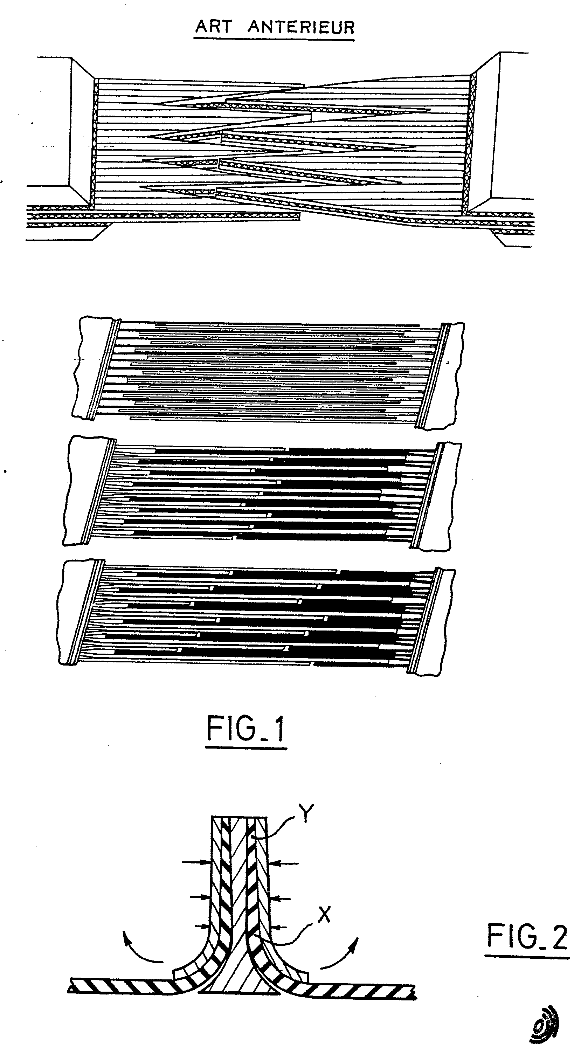

Des exemples sont illustrés sur la figure 1, relative à l'art antérieur dans le jonctionnement à chaud.

Il existe cependant, des conditions qui rendent inapplicables les techniques de jonctionnement à chaud : par exemple, la longueur

d'une telle jonction peut être incompatible avec la place disponible dans la gaine ou à côté de l'élévateur, ou encore la résistance mécanique peut devenir insuffisante pour garantir un fonctionnement sans incident de l'élévateur, si la température des produits transportés ou celle des gaz qui circulent dans la gaine est supérieure à 100 °C.

En effet, dans le cas d'une imbrication des cables métalliques, la liaison entre les deux extrémités de courroie(s) est assurée par le mélange de caoutchouc séparant les extrémités des cables. Or, il est connu que lorsque la température croît, les propriétés mécaniques des mélanges à base d'élastomères diminuent et il en est de même des forces de liaison entre le caoutchouc et le métal ; en conséquence, la résistance à la traction d'une telle jonction décroit lorsque la température s'élève.

Compte tenu des risques encourus avec une jonction par collage à chaud et imbrication des cables métalliques, les techniciens de la manutention ont proposé de remplacer la liaison par collage par une liaison mécanique visant à serrer l'une contre l'autre les deux extrémités de courroie(s).

Ces techniques sont désignées par le terme "d'agrafage" et sont décrites, par exemple, dans le brevet FR 1320222 de Pneumatiques, Caoutchouc Manufacturé et Plastiques Kléber Colombes ou dans les publicités des sociétés spécialisées telles que Goro ou Flexco.

L'effort de compression est assuré par des joues métalliques que traversent des boulons de serrage. Le principe appliqué dans la jonction des extrémités de courroie(s) par voie mécanique est théoriquement plus satisfaisant que le fonctionnement par collage à chaud mais l'analyse des phénomènes qui accompagnent la mise en service de ce type de dispositifs démontre que la sécurité de fonctionnement n'est que peu améliorée. En effet, sous l'effort de traction exercé sur les deux extrémités de la courroie, les plaques latérales ont tendance à s'écarter l'une de l'autre.

Pour remédier à ce défaut, on utilise, généralement, deux lignes de boulons pour assurer le serrage des plaques, la ligne de boulons placée le plus près de la zone de tension étant destinée à limiter le déplacement des plaques.

La figure 2, relative à l'art antérieur dans la technique d'agrafage, permet d'expliquer les modifications qui interviennent, en fonctionnement, au niveau de la répartition de la pression sur les extrémités de la courroie.

Lors du serrage initial du dispositif d'agrafage, la pression est répartie uniformément sur l'ensemble des deux extrémités serrées.

À la mise en service, il se produit un déplacement des pièces latérales qui tend à diminuer la pression dans la zone X et à l'augmenter dans la zone Y. Sous l'effet de l'accroissement de pression, le mélange de caoutchouc qui se trouve dans la zone Y a tendance à être chassé et flue c'est-à-dire qu'il y a déplacement du caoutchouc des zones les plus comprimées vers les zones les moins comprimées. Ce fluage a pour effet de favoriser encore le rapprochement des plaques de serrage dans la zone Y, ce qui accentue le phénomène.

À l'appui de cette analyse, on constate couramment que la seconde ligne de boulons est totalement desserrée ce qui prouve que l'effort de pression exercé sur les extrémités de courroie(s) n'est pas dû aux boulons mais à un mouvement de rotation des plaques de serrage. Comme dans la zone X, l'effort de serrage a notablement baissé, la tenue d'une telle agrafe n'est due qu'à la retenue des cables métalliques dans la zone Y et aux forces de frottement existant dans la zone X entre la courroie et chacune des plaques de serrage. Après desserrage de la zone Y, l'examen des extrémités de courroie(s) dans ladite zone montre que l'effort de tension est tel qu'il y a destruction locale du mélange caoutchouc et de la liaison entre le caoutchouc et les cables métalliques. De ce fait, la tenue d'une telle agrafe devient très problématique surtout

lorsque vient s'ajouter à cet effet mécanique celui de la température. Il est, en effet, bien connu que l'augmentation de température accélère et facilite le fluage des mélanges à base d'élastomères et diminue la force de la liaison entre lesdits mélanges et les cables d'acier.

Pour pallier ce défaut, on peut essayer de renforcer la pression exercée par les plaques latérales par un blocage des extrêmités des cables métalliques.

Le brevet DE 2341992 de Bernhard Beumer Maschinenfabrik décrit une telle solution, dans laquelle chaque cable métallique est dénudé à son extrêmité de son enrobage de caoutchouc et ladite extrêmité est inserrée dans un dispositif de serrage par vis. Une telle technique, longue et délicate à mettre en oeuvre, présente, en outre, un risque du fait de la conception de la zone de serrage du cable. En effet, si la pression de serrage n'est pas contrôlée, il existe un risque certain de couper le cable, ce qui réduirait à néant l'effet escompté. De plus, sous l'effet des vibrations et de la température, les vis ont tendance à se desserrer et nécessitent donc une surveillance constante.

Une solution différente, utilisée notamment pour assurer le blocage des cables de prétension des structures précontraintes, consiste à dénuder les extrêmités des cables métalliques, à détoronner, c'est à dire à détruire l'enroulement des brins constitutifs, pour en épanouir l'extrêmité et à couler, autour, un métal à bas point de fusion.

Cette technique présente une grande fiabilité lorsqu'elle est utilisable ; en effet, la coulée du métal en fusion nécessite la mise en position verticale de l'agrafe, ce qui implique, soit que l'on puisse déplacer l'un des tambours de l'élévateur - ce qui n'est pas toujours possible - soit que l'on puisse placer l'agrafe au sommet de l'élévateur, mais la coulée d'un métal en fusion, sur des extrêmités de cables métalliques, à une hauteur de plusieurs dizaines de mètres est alors délicate, voire dangereuse. En outre, un tel dispositif est pratiquement indémontable ce qui ne facilite pas les opérations d'entretien de l'élévateur ou de remplacemnet de la courroie.

L'invention a donc pour objet un dispositif d'agrafage pour la jonction de courroies, et, plus particulièrement, de courroies pour élévateurs à godets, comportant un renforcement en textile synthétique ou en cables métalliques. L'invention a également pour objet le procédé de réalisation de jonctions utilisant le dispositif décrit et l'application à une courroie transporteuse élévatrice.

Le dispositif d'agrafage objet de l'invention permet de réaliser, par une méthode aussi simple que les jonctionnements conventionnels et en toute sécurité puisque sans manipulation de produits chauds ou de colles ni d'équipement de chauffage, une jonction entre deux extrémités voisines de deux courroies pour obtenir une courroie plus longue ou entre les deux extrémités d'une même courroie pour obtenir un article "sans fin" prêt à fonctionner sur un convoyeur ou un élévateur.

Le dispositif, qui ne nécessite qu'une préparation simplifiée des extrémités, agit d'une part par blocage par l'intermédiaire d'une boucle réalisée autour d'un noyau de blocage, d'autre part par un serrage mécanique desdites extrémités sur la plus grande longueur possible.

Ce dispositif d'agrafage comporte, d'une part, deux plaques centrales, uniquement destinées au montage et servant à l'appui des extrémités de courroie(s), sur lesquelles viennent se fixer, dans la partie haute, deux coins de montage permettant la mise à l'équerre de l'ensemble, d'autre part, deux noyaux de blocage permettant de réaliser des boucles avec les extrémités de courroie(s) et, enfin, deux pièces latérales de serrage munies chacune d'une articulation à rotule.

Ce dispositif agit comme une pince auto-serrante, à basculement, au moyen de ses différentes pièces constitutives, les pièces latérales de serrage venant serrer la courroie au moyen de boulons traversants.

Les caractéristiques et variantes de l'invention seront mieux comprises à la lecture de la description ci-après et en se référant aux dessins, dans lesquels, après les figures 1 et 2 illustrant l'art antérieur.

-la figure 3 représente le dispositif d'agrafage utilisé pour la jonction de deux courroies ou la mise en sans fin d'une courroie,

-la figure 4 détaille certains des éléments constitutifs d'une réalisation particulière du dispositif d'agrafage,

-la figure 5 explique le montage de la courroie sur le dispositif d'agrafage,

-la figure 6 illustre le procédé de jonctionnement utilisant le dispositif d'agrafage objet de l'invention,

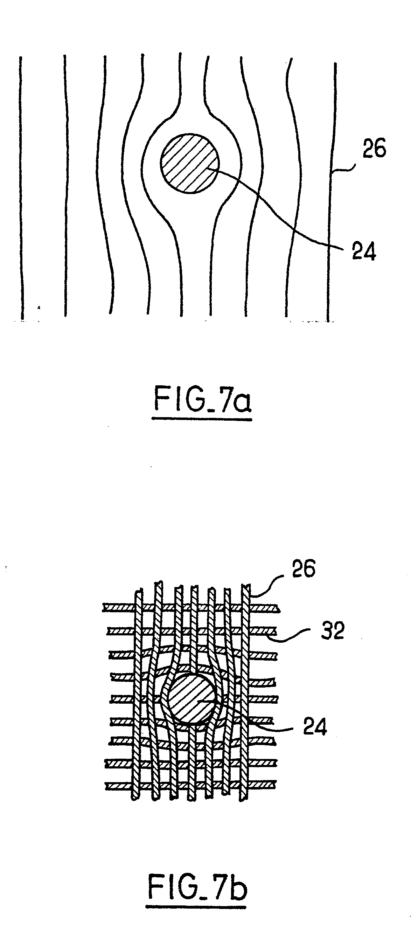

-la figure 7 montre une disposition particulière permettant d'améliorer la qualité de la jonction,

-la figure 8 explique le principe de fonctionnement par auto-serrage du dispositif d'agrafage objet de l'invention.

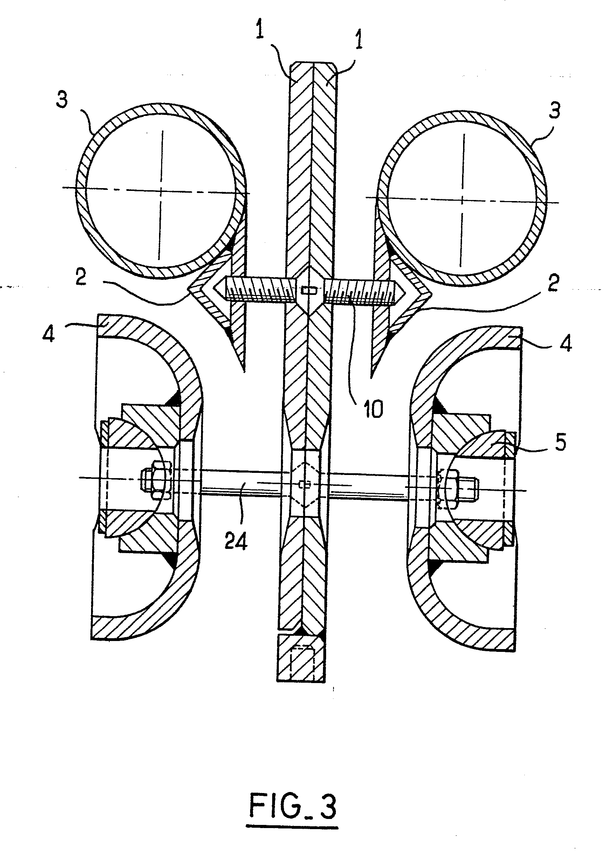

La figure 3 montre le dispositif d'agrafage en position d'assemblage, qui est constitué des éléments suivants :
- 2 plaques centrales d'appui (1) sur lesquelles viendront se fixer mécaniquement par le dispositif (10), deux coins (2) pour le montage et la mise à l'équerre de la courroie,
- 2 noyaux de blocage (3), de section généralement cylindrique,
- et 2 pièces latérales de serrage (4) munies d'une articulation à rotule (5).

Toutes les pièces constitutives du dispositif d'agrafage peuvent être réalisées en acier, ce qui conduit pour l'agrafe à un poids total de 80 kg environ par mètre de longueur.

Un allègement important est obtenu en réalisant les noyaux de blocage (3) et les plaques centrales d'appui (1), en matériau de densité inférieure, telle que du duralumin, un matériau composite

**0221817**

à matrice rigide ou un mélange à base de caoutchouc renforcé de charges ou de fibres textiles ou métalliques.

Dans le cas d'utilisation de duralumin, le poids de l'agrafe est ramené à 59 kg environ par mètre de longueur, ce qui accroît l'intérêt de ce type d'agrafage au niveau du bilan énergétique du transporteur.

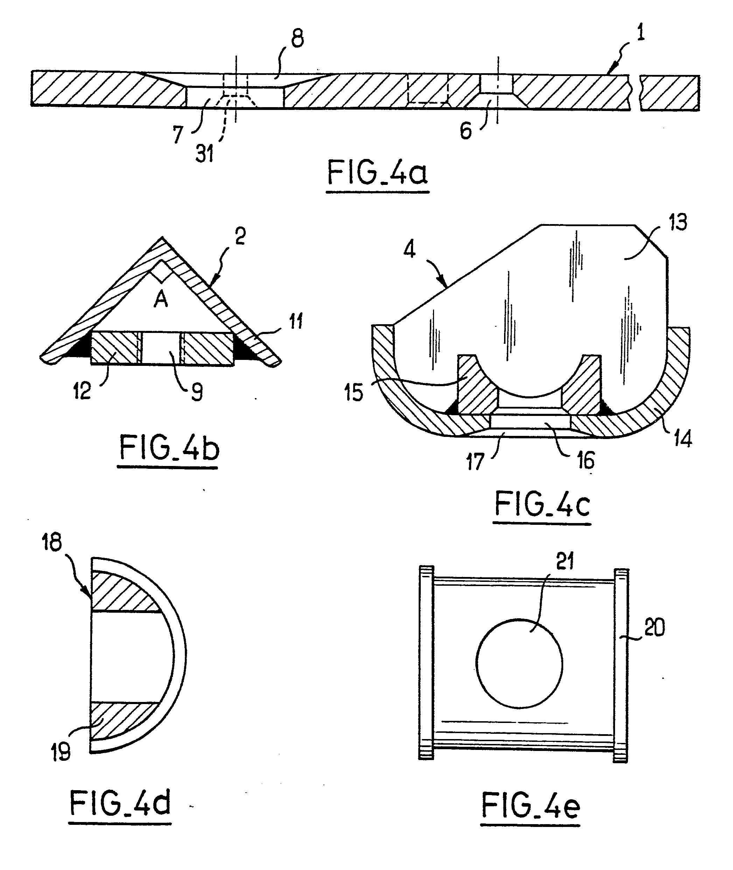

La figure 4 détaille certains des éléments constitutifs d'une réalisation particulière du dispositif d'agrafage.

Sur la vue 4 a est représentée l'une des plaques centrales (1) avec dans sa partie supérieure, un trou (6) pour la fixation mécanique des coins de montage et de mise à l'équerre et, dans sa partie inférieure, un trou (7) pour le passage des boulons traversants avec un évidement (8) qui permettra l'expansion du revêtement de caoutchouc au voisinage de la zone de serrage par les boulons traversants et, dans le même axe, un trou (31) pour le maintien de la boucle avant serrage.

Sur la vue 4b est représentée l'une des formes possibles des coins de montage et de mise à l'équerre (2) qui comporte un trou (9) qui permettra la fixation de la courroie entre le coin (2) et la plaque centrale d'appui (1). Les trous (6) de ladite plaque (1) et (9) du coin de montage et de mise à l'équerre (2) recevront le dispositif d'assemblage (10) de la figure 3.

Dans l'exemple illustré, le coin de montage et de mise à l'équerre (2) est constitué d'une pièce en "L" (11) où l'angle A est de 90° et d'un élément de base (12) soudé percé du trou taraudé (9) pour la fixation avec la plaque centrale d'appui (1).

Sur la vue 4c est illustrée en coupe une réalisation particulière de l'une des pièces latérales de serrage (4), composée d'un raidisseur (13) et d'une tôle de répartition de serrage (14) sur laquelle est fixée, par soudure, le support de rotule (15). La pièce latérale de serrage (4) comporte un trou (16) pour le passage des

boulons traversants et un évidement (17) pour permettre l'expansion du revêtement de caoutchouc au voisinage de la zone de serrage par le boulon traversant.

Sur les vues 4d et 4e est illustré, en coupe, le dispositif de rotule (18) qui viendra s'inserrer dans le support de rotule (15) de la pièce latérale de serrage (4). Il est constitué d'un demi cylindre (19) comportant deux épaulements (20) de positionnement latéral et est percé d'un trou (21) pour le passage des boulons traversants.

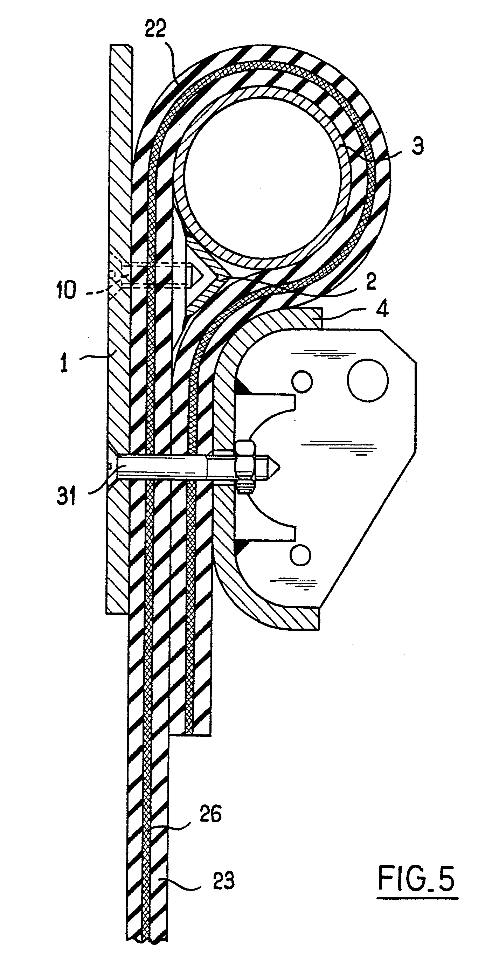

La figure 5 illustre le principe de montage du dispositif d'agrafage sur une extrémité de courroie, unitairement, dans le transporteur ou en dehors.

L'opération commence par la réalisation de la boucle. Pour ce faire, l'extrémité (22) de la courroie (23) à assembler est amenée en appui sur la plaque centrale (1), le coin de montage et de mise à l'équerre (2) est fixé au moyen des éléments mécaniques (10) sur ladite plaque centrale au travers de l'extrémité (22) de la courroie. Le noyau de blocage (3) est alors placé contre le coin de montage (2) et la boucle est formée autour dudit noyau de blocage, à l'aide d'un outil de formage. La pièce de serrage (4) est mise en place et maintenue à l'aide de serre-joints sur la pièce centrale (1), puis fixée par des vis et écrous de montage (31).

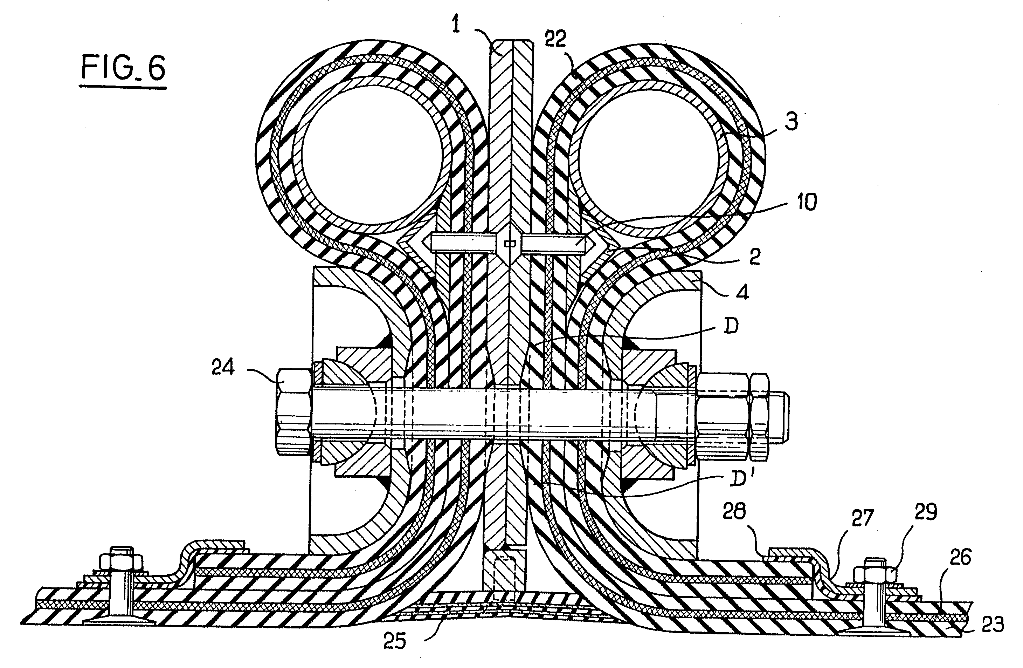

La figure 6 illustre le procédé de jonctionnement de la courroie qui utilise le dispositif d'agrafage objet de l'invention. Après réalisation des boucles formées en appui sur les pièces centrales (1), les deux pièces sont placées dos à dos et serrées mécaniquement par les boulons traversants (24). L'expansion des revêtements en caoutchouc lors de l'introduction dans la courroie des boulons traversants (24), vient se placer dans les évidements (8) des plaques centrales d'appui (1) et (17) des plaques latérales de serrage (4).

Un couvre-joint élastique (25), en caoutchouc comportant des renforcements textiles ou métalliques, est ajouté au dispositif

d'agrafage pour permettre le passage sur les rouleaux et tambours sans choc et, en plus, sans bruit.

Afin que les extrémités (22) de courroie(s) à assembler puissent s'enrouler sans contrainte excessive autour des noyaux de blocage (3), lesdits noyaux doivent posséder un diamètre suffisant. La valeur minimale n'est pas critique avec une courroie à renforcement textile qui est assez souple mais, pour une courroie dont le renforcement est constitué de cables métalliques, le diamètre desdits noyaux de blocage (3) doit être au moins égal à 16 fois le diamètre des cables métalliques et, préférentiellement, 20 fois.

Afin d'éviter une pollution par des poussières ou des attaques chimiques, il est possible de terminer le jonctionnement par la pose d'un couvre-joint d'extrémité (27) placé sur une feuille de matériau isolant (28), cellulaire par exemple, et fixé sur la courroie (23) au moyen d'un dispositif de serrage mécanique (29).

Pour étendre cette protection contre la pollution à l'ensemble de la zone de jonction, il est possible de disposer à la partie supérieure du dispositif un capot (non représenté), le plus souvent réalisé en tôle, et de compléter l'étanchéité par la pose d'un mastic ou de toute matière malléable.

Il est possible, afin d'augmenter la résistance mécanique, donc l'efficacité de la jonction, en limitant le nombre des ruptures des éléments de renforcement dans la zone de passage des boulons, de disposer, lors du montage, lesdits éléments de renforcement (26) de manière à ce qu'ils soient déviés de leur trajectoire initiale autour de la tige desdits boulons (24) comme schématisé sur la figure (7). Cette opération s'effectue au moyen d'un outil adapté, par exemple du type à embout conique.

La vue 7a illustre la déviation des éléments de renforcement lorsque ledit renforcement est constitué de cables textiles ou de cables métalliques (26), initialement parallèles, pour former une nappe.

La vue 7b représente le même phénomène dans un élément de renforcement comportant une trame (26) composée de textile ou de cables métalliques et une chaîne (32) également constituée de textile ou de cables métalliques. La déviation des fils se produit, alors, longitudinalement sur la trame (26) et transversalement sur la chaîne (32).

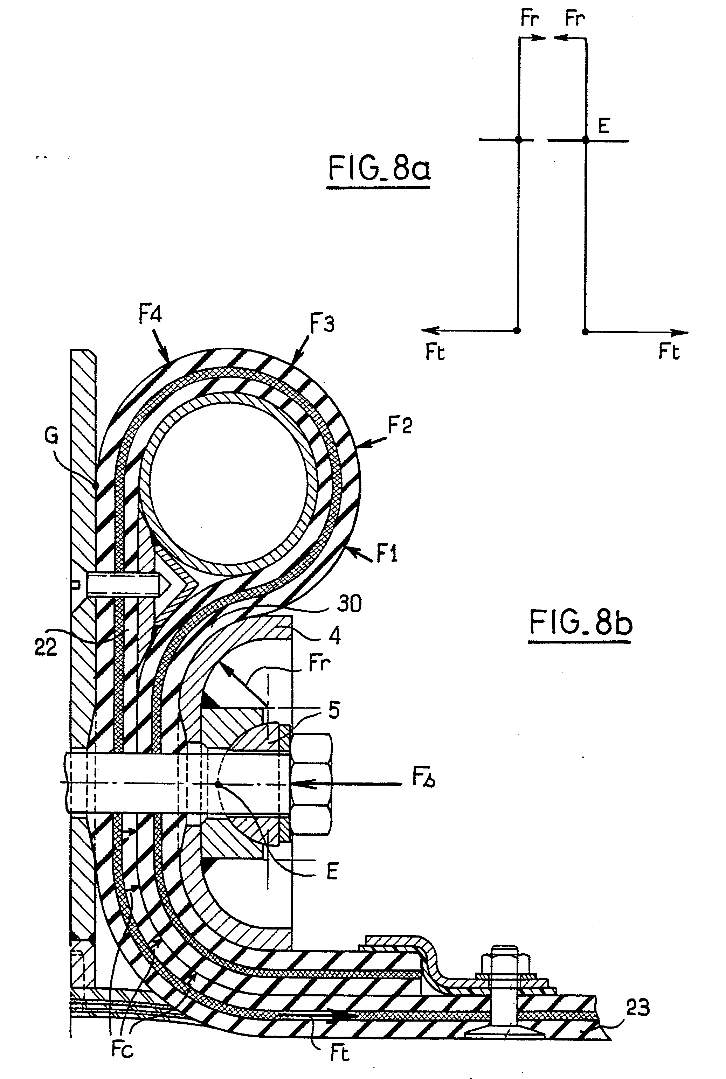

La figure 8 permet de comprendre le principe et le fonctionnement du système d'auto-serrage.

La vue 8a montre la composition des forces. La force de traction (Ft) qui agit sur le corps de la courroie, engendre par rapport au point (E) une force de réaction (Fr).

La vue 8b illustre le même phénomène sur une demie-vue de l'agrafage. La force de traction (Ft) qui agit sur le corps de la courroie (23) entraîne une compression schématisée par les forces (Fc) dans l'extrémité de la courroie (22) qui tend à rapprocher les 2 parties de la courroie grâce à son dispositif à rotule (5), la pièce latérale de serrage (4) vient alors, par basculement autour du point (E), exercer une force d'appui (Fr) sur le retour de boucle de la courroie (30) ce qui engendre une série de forces (f1), (f2), (f3)... progressivement croissantes jusqu'au point (G) d'appui de l'extrémité de la courroie sur la plaque centrale (1) provoquant, de ce fait, un auto-serrage de l'extrémité de la courroie autour du noyau de blocage (3).

De manière évidente, la force de serrage du boulon traversant (Fs) doit être supérieure à la somme des forces de traction (Ft) et de réaction (Fr).

La description de l'invention et les figures qui s'y rapportent permettent de constater que le dispositif d'agrafage objet de l'invention offre, par rapport aux dispositifs connus, les avantages suivants :

- application aux courroies à renforcement textile comme à celles dont le renforcement est constitué de cables métalliques.

- absence de nécessité de préparation des extrémités de la courroie.

- montage réalisable à plat, hors du transporteur, sans nécessité d'outillage complexe.

- possibilité de réduire le nombre des éléments de renforcements coupés, donc d'augmenter la résistance de la jonction.

- suppression de l'opération de collage des extrémités de la courroie donc de l'équipement nécessaire tels que presses à vulcaniser, pièces de moulage ou dispositif de confection.

- possibilité d'allègement par réalisation des noyaux de blocage et/ou des pièces centrales d'appui en métal léger ou en matériaux composites, permettant d'améliorer le bilan énergétique de l'installation.

- réduction des problèmes de maintenance en service, puisque le fluage éventuel du caoutchouc dans les zones de serrage est compensé par le basculement des pièces latérales de serrage.

- fiabilité accrue grâce au phénomène d'auto-serrage exercé par le dispositif à rotule des pièces latérales de serrage.

L'homme de l'art peut, bien entendu, apporter diverses modifications au dispositif, au procédé et aux applications décrits et illustrés à titre d'exemples non limitatifs sans sortir du cadre de l'invention.

REVENDICATIONS                                      **0221817**

1° Dispositif d'agrafage pour la jonction de courroies et, plus particulièrement de courroies pour élévateur à godets, comportant un élément de renforcement en textile synthétique ou en cables métalliques, caractérisé en ce qu'il est constitué de deux plaques centrales d'appui (1), de deux coins (2) de montage et de mise à l'équerre, de deux noyaux de blocage (3) qui permettent de réaliser des boucles avec les extrémités de courroie(s) et de deux plaques latérales de serrage (4) munies chacune d'une articulation à rotule (5), ces différents éléments constitutifs permettant audit dispositif de fonctionner par auto-serrage avec basculement.

2° Dispositif d'agrafage pour la jonction de courroies, selon la revendication 1, caractérisé en ce que, pour une utilisation avec des courroies renforcées de cables métalliques longitudinaux, le rayon de courbure des noyaux de blocage (3) est au moins égal à 8 fois le diamètre desdits cables métalliques.

3° Dispositif d'agrafage pour la jonction de courroies selon l'une des revendications 1 ou 2, caractérisé en ce que les plaques centrales d'appui (1) et/ou les noyaux de blocage (3) sont réalisés en métal léger tel que le duralumin.

4° Dispositif d'agrafage pour la jonction de courroies selon l'une des revendications 1 ou 2, caractérisé en ce que les plaques centrales d'appui (1) et /ou les noyaux de blocage (3) sont réalisés en matériau composite à matrice rigide.

5° Dispositif d'agrafage pour la jonction de courroies selon l'une des revendications 1 ou 2, caractérisé en ce que les noyaux de blocage (3) sont réalisés dans un mélange à base de caoutchouc renforcé par des charges ou des fibres textiles ou métalliques.

6° Dispositif d'agrafage pour la jonction de courroies selon l'une des revendications 1 à 5, caractérisé en ce qu'un capot de protection contre la pollution et les intempéries est fixé à la partie supérieure dudit dispositif et rendu étanche par l'emploi d'un mastic.

- 13 -

0221817

7° Procédé de jonction par agrafage de courroies caractérisé en ce que les extrémités de courroie(s), non dénudées de leur revêtement de caoutchouc sont serrées, après formation d'une boucle autour des noyaux de blocage (3), par l'intermédiaire de boulons traversants (24), entre les plaques centrales d'appui (1) et les plaques latérales de serrage (4) du dispositif d'agrafage conforme à l'une des revendications 1 à 6.

8° Procédé de jonctionnement par agrafage de courroies selon la revendication 7, caractérisé en ce que les éléments de renforcement longitudinaux (26) et/ou transversaux (32) des courroies sont déviés de leur trajectoire initiale, au voisinage des boulons traversants (24) assurant la fixation des éléments constitutifs du dispositif d'agrafage avec la courroie.

9° Courroie transporteuse pour élévateur à godets dont la jonction ou la mise en sans fin est réalisée selon l'une des revendications 7 ou 8 et en utilisant le dispositif d'agrafage conforme à l'une des revendications 1 à 6.

ART ANTERIEUR

FIG.1

FIG.2

FIG_3

FIG_4a

FIG_4b

FIG_4c

FIG_4d

FIG_4e

FIG.5

FIG.6

FIG_7a

FIG_7b

0221817

FIG_8a

FIG_8b